(19) Europäisches Patentamt
European Patent Office
Office européen des brevets

(11) **EP 4 517 466 A1**

(12) **EUROPEAN PATENT APPLICATION**
published in accordance with Art. 153(4) EPC

(43) Date of publication:
**05.03.2025 Bulletin 2025/10**

(21) Application number: **22939345.9**

(22) Date of filing: **29.04.2022**

(51) International Patent Classification (IPC):
**G05D 1/08** $^{(2006.01)}$

(52) Cooperative Patent Classification (CPC):
**G05D 1/08**

(86) International application number:
**PCT/CN2022/090607**

(87) International publication number:
**WO 2023/206498 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Robot Technology Co., Ltd.**
**Beijing 100176 (CN)**

(72) Inventor: **XU, Zhe**
**Beijing 100176 (CN)**

(74) Representative: **Dehns Germany Partnerschaft mbB**
**Theresienstraße 6-8**
**80333 München (DE)**

(54) **LEGGED ROBOT CONTROL METHOD AND APPARATUS, MEDIUM, AND LEGGED ROBOT**

(57)     A legged robot control method and apparatus, a medium, and a legged robot. The method comprises: acquiring motion data of a legged robot (11); determining, according to the motion data and a preset inverted pendulum model corresponding to the legged robot, a body motion trajectory and foot-landing points of the legged robot (12); and controlling the legged robot to perform lateral striding motion on the basis of the body motion trajectory, so that foot ends of the legged robot move to the foot-landing points (13). The preset inverted pendu-
lum model corresponding to the legged robot can be obtained by using the legged robot as an inverted pendulum; and the body motion trajectory and the foot-landing points that meet a kinetic requirement of the legged robot may be generated in combination with the motion data of the legged robot and the preset inverted pendulum model, so that the actual motion of the legged robot in the lateral striding motion is matched with the body motion trajectory, and the stability of the lateral striding motion of the legged robot is improved.

**EP 4 517 466 A1**

obtain locomotion data of a legged robot — 11

determine a torso locomotion trajectory and foot placement of the legged robot according to the locomotion data and a preset inverted pendulum model corresponding to the legged robot — 12

control the legged robot to perform lateral step locomotion based on the torso locomotion trajectory, so that feet of the legged robot move to the foot placement — 13

FIG. 1

Description

## TECHNICAL FIELD

The disclosure relates to the field of control technology, in particular to a legged robot control method and apparatus, a medium and a legged robot.

## BACKGROUND

Currently, mobile robots play an increasingly important role in life, providing people with various conveniences. The mobile robots are divided into wheeled, tracked, and legged robots, and use of the wheeled and tracked robots are greatly limited on rough terrain or complex and changeable terrain, for example, mobility on sandy surfaces or rugged ground is affected. The legged robot can move as long as it contacts the ground. The requirement on the ground is relatively low, and therefore, the legged robots have a better use prospect.

Taking the legged robot being a quadrupedal robot as an example, the existing quadrupedal robot can realize various gait motions. For example, the quadrupedal robot can calculate the optimal foot placement by comparing a current posture of the robot with an initial gait to realize stable locomotion of the robot.

## SUMMARY

The disclosure provides a legged robot control method and apparatus, a medium and a legged robot to solve defects of the related art.

According to a first aspect of embodiments of the present disclosure, there is provided a legged robot control method, including:

   obtaining locomotion data of the legged robot;
   determining a torso locomotion trajectory and foot placement of the legged robot according to the locomotion data and a preset inverted pendulum model corresponding to the legged robot;
   controlling the legged robot to perform lateral step locomotion based on the torso locomotion trajectory, so that feet of the legged robot move to the foot placement.

Optionally, obtaining the locomotion data of the legged robot includes:

   obtaining a working mode of the legged robot, where the working mode includes a dancing mode;
   in response to lateral step locomotion in the dancing mode, obtaining a locomotion amplitude and a direction corresponding to the lateral step locomotion, and using the locomotion amplitude and the direction as the locomotion data.

Optionally, determining the torso locomotion trajectory and the foot placement of the legged robot according to the locomotion data and the preset inverted pendulum model corresponding to the legged robot includes:

   obtaining an initial displacement and an initial velocity corresponding to the legged robot in a first state;
   determining, according to the initial displacement, the initial velocity, and the preset inverted pendulum model, a first inverted pendulum model corresponding to the legged robot in transformation from the first state to a fourth state;
   where the first state refers to a standing state of the legged robot before the lateral step locomotion, and the fourth state refers to a state in which feet on a first side touch a ground after taking a step while feet on a second side have not taken a step yet and the feet on the two sides are simultaneously grounded when the legged robot performs lateral step locomotion in the direction;
   according to the first inverted pendulum model, obtaining a first torso locomotion trajectory corresponding to the legged robot in transformation from the first state to the fourth state and obtaining a first target displacement and a first target velocity corresponding to the legged robot in the fourth state; where the first target displacement is equal to the locomotion amplitude and a position corresponding to the first target displacement is used as the foot placement;
   determining, according to the first target displacement and the first target velocity, a second inverted pendulum model corresponding to the legged robot in transformation from the fourth state to a seventh state; where the seventh state refers to a state in which the feet on the second side of the legged robot touch the ground after taking a step and the feet on the two sides are grounded simultaneously;
   obtaining a second torso locomotion trajectory corresponding to the legged robot in transformation from the fourth state to the seventh state according to the second inverted pendulum model;

the torso locomotion trajectory of the legged robot includes the first torso locomotion trajectory and the second torso locomotion trajectory.

Optionally, obtaining the locomotion data of the legged robot includes:

obtaining lateral disturbance data of a torso of the legged robot, where the lateral disturbance data includes lateral velocity and lateral displacement;
in response to the lateral disturbance data exceeding a preset disturbance threshold, determining that the lateral disturbance data is the locomotion data; the preset disturbance threshold including a preset velocity threshold or a preset displacement threshold.

Optionally, determining the torso locomotion trajectory and the foot placement of the legged robot according to the locomotion data and the preset inverted pendulum model corresponding to the legged robot includes:

obtaining a locomotion amplitude and a direction of the legged robot;
determining, according to the lateral displacement and the lateral velocity corresponding to the legged robot in a first state and the preset inverted pendulum model, a first inverted pendulum model corresponding to the legged robot in transformation from the first state to a fourth state; where the first state refers to a standing state of the legged robot before the lateral step locomotion, and the fourth state refers to a state in which feet on a first side touch the ground after taking a step while feet on a second side have not taken a step yet and the feet on the two sides are simultaneously grounded when the legged robot performs lateral step locomotion in the direction;
according to the first inverted pendulum model, obtaining a first torso locomotion trajectory corresponding to the legged robot in transformation from the first state to the fourth state and obtaining a first target displacement and a first target velocity corresponding to the legged robot in the fourth state; where the first target displacement is equal to the locomotion amplitude and a position corresponding to the first target displacement is used as the foot placement;
determining, according to the first target displacement and the first target velocity, a second inverted pendulum model corresponding to the legged robot in transformation from the fourth state to a seventh state; where the seventh state refers to a state in which the feet on the second side of the legged robot touch the ground after taking a step and the feet of the two sides are grounded simultaneously;
obtaining a second torso locomotion trajectory corresponding to the legged robot in transformation from the fourth state to the seventh state according to the second inverted pendulum model;
the torso locomotion trajectory of the legged robot includes the first torso locomotion trajectory and the second torso locomotion trajectory.

Optionally, the method further includes:

obtaining a second target displacement and a second target velocity corresponding to a current state of the legged robot during transformation process to the fourth state when the legged robot has not transformed to the fourth state;
updating the first torso locomotion trajectory according to the second target displacement and the second target velocity.

According to a second aspect of the embodiments of the present disclosure, there is provided a legged robot control apparatus, including:

a locomotion data obtaining module, configured to obtain locomotion data of the legged robot;
a locomotion trajectory obtaining module, configured to determine a torso locomotion trajectory and foot placement of the legged robot according to the locomotion data and a preset inverted pendulum model corresponding to the legged robot;
a lateral step controlling module, configured to control the legged robot to perform lateral step locomotion based on the torso locomotion trajectory, so that feet of the legged robot move to the foot placement.

Optionally, the locomotion data obtaining module includes:

a working mode obtaining unit, configured to obtain a working mode of the legged robot, where the working mode includes a dancing mode;
a locomotion data obtaining unit, configured to, in response to a lateral step locomotion in the dancing mode, obtain a locomotion amplitude and a direction corresponding to the lateral step locomotion, and use the locomotion amplitude and the direction as the locomotion data.

Optionally, the motion trajectory obtaining module includes:

an initial data obtaining unit, configured to obtain an initial displacement and an initial velocity corresponding to the legged robot in a first state;

a first model determining unit, configured to determine, according to the initial displacement, the initial velocity, and the preset inverted pendulum model, a first inverted pendulum model corresponding to the legged robot in transformation from the first state to a fourth state; where the first state refers to a standing state before the lateral step locomotion of the legged robot, and the fourth state refers to a state where feet on a first side touch a ground after taking a step while feet on a second side have not taken a step yet and the feet on the two sides are simultaneously grounded when the legged robot performs lateral step locomotion in the direction;

a first trajectory obtaining unit, configured to according to the first inverted pendulum model, obtain a first torso locomotion trajectory corresponding to the legged robot in transformation from the first state to the fourth state, and obtain a first target displacement and a first target velocity corresponding to the legged robot in the fourth state; where the first target displacement is equal to the locomotion amplitude and a position corresponding to the first target displacement is used as the foot placement;

a second model determining unit, configured to determine, according to the first target displacement and the first target velocity, a second inverted pendulum model corresponding to the legged robot in transformation from the fourth state to a seventh state; where the seventh state refers to a state in which the feet on the second side of the legged robot touch the ground after taking a step and the feet of on the two sides are grounded simultaneously;

a second trajectory obtaining unit, configured to obtain a second torso locomotion trajectory corresponding to the legged robot in transformation from the fourth state to the seventh state according to the second inverted pendulum model;

the torso locomotion trajectory of the legged robot includes the first torso locomotion trajectory and the second torso locomotion trajectory.

Optionally, the locomotion data obtaining module includes:

a disturbance data obtaining unit, configured to obtain lateral disturbance data of a torso of the legged robot, where the lateral disturbance data includes lateral velocity and lateral displacement;

a locomotion data determining unit, configured to determine that the lateral disturbance data is the locomotion data in response to the lateral disturbance data exceeding a preset disturbance threshold; where the preset disturbance threshold includes a preset velocity threshold or a preset displacement threshold.

Optionally, the locomotion trajectory obtaining module includes:

an amplitude and direction obtaining unit, configured to obtain a locomotion amplitude and a direction of the legged robot;

a first model determining unit, configured to determine, according to the lateral displacement and the lateral velocity corresponding to the legged robot in a first state and the preset inverted pendulum model, a first inverted pendulum model corresponding to the legged robot in transformation from the first state to a fourth state; where the first state refers to a standing state of the legged robot before the lateral step locomotion, and the fourth state refers to a state in which feet on a first side touch a ground after taking a step while feet on a second side have not taken a step yet and the feet on the two sides are simultaneously grounded when the legged robot performs lateral step locomotion in the direction;

a first trajectory obtaining unit, configured to according to the first inverted pendulum model, obtain a first torso locomotion trajectory corresponding to the legged robot in transformation from the first state to the fourth state, and obtain a first target displacement and a first target velocity corresponding to the legged robot in the fourth state; where the first target displacement is equal to the locomotion amplitude and a position corresponding to the first target displacement is used as the foot placement;

a second model determining unit, configured to determine, according to the first target displacement and the first target velocity, a second inverted pendulum model corresponding to the legged robot in transformation from the fourth state to a seventh state; where the seventh state refers to a state in which the feet on the second side of the legged robot touch the ground after taking a step and the feet on the two sides are grounded simultaneously;

a second trajectory obtaining unit, configured to obtain a second torso locomotion trajectory corresponding to the legged robot in transformation from the fourth state to the seventh state according to the second inverted pendulum model;

the torso locomotion trajectory of the legged robot includes the first torso locomotion trajectory and the second torso locomotion trajectory.

Optionally, the motion trajectory obtaining module further includes:

a second displacement obtaining unit, configured to obtain a second target displacement and a second target velocity corresponding to the legged robot in a current state during transformation process to the fourth state when the legged robot has not transformed to the fourth state;
a first trajectory updating unit, configured to update the first torso locomotion trajectory according to the second target displacement and the second target velocity.

According to a third aspect of the embodiments of the present disclosure, there is provided a legged robot, including:

a memory and a processor;
the memory is configured to store a computer program executable by the processor;
the processor is configured to execute the computer program in the memory to implement the above method.

According to a fourth aspect of the embodiments of the present disclosure, there is provided a non-transitory computer-readable storage medium, when a processor when executing an executable computer program in the storage medium, can implement the above method.

The technical solutions provided by the embodiments of the present disclosure may include the following beneficial effects:

It can be seen from the above embodiments that with the solution provided by the embodiments of the present disclosure, locomotion data of the legged robot may be obtained; a torso locomotion trajectory and foot placement of the legged robot may be determined according to the locomotion data and a preset inverted pendulum model corresponding to the legged robot; and the legged robot may be controlled to perform lateral step locomotion based on the torso locomotion trajectory, so that the feet of the legged robot move to the foot placement. In this way, in the embodiments, the legged robot is treated as an inverted pendulum to obtain the preset inverted pendulum model corresponding to the legged robot; and by combining the locomotion data of the legged robot and the preset inverted pendulum model, the torso locomotion trajectory and the foot placement meeting dynamic requirements of the legged robot can be generated, so that actual locomotion of the legged robot in the lateral step locomotion matches the above torso locomotion trajectory, and the stability of the lateral step locomotion of the legged robot is improved.

It should be understood that the above general description and the following detailed description are exemplary and explanatory only and are not intended to limit the present disclosure.

## BRIEF DESCRIPTION OF DRAWINGS

The drawings herein are incorporated in and constitute a part of this description, illustrating embodiments consistent with the present disclosure and, together with the description, serve to explain principles of the present disclosure.

FIG. 1 is a flowchart of a legged robot control method according to an exemplary embodiment.
FIG. 2 is a flowchart of obtaining locomotion data according to an exemplary embodiment.
FIG. 3 is another flowchart of obtaining locomotion data according to an exemplary embodiment.
FIG. 4 is a schematic diagram of a coordinate system of a legged robot according to an exemplary embodiment.
FIG. 5 is a schematic diagram illustrating decomposed states in a lateral step according to an exemplary embodiment.
FIG. 6 is a schematic diagram illustrating a locomotion displacement according to an exemplary embodiment.
FIG. 7 is a flowchart of obtaining a torso locomotion trajectory and foot placement according to an exemplary embodiment.
FIG. 8 is a schematic diagram of a linear inverted pendulum model according to an exemplary embodiment.
FIG. 9 is another flowchart of obtaining a torso locomotion trajectory and foot placement according to an exemplary embodiment.
FIG. 10 is a flowchart of updating a first torso locomotion trajectory according to an exemplary embodiment.
FIG. 11 is a flowchart of a legged robot control method according to an exemplary embodiment.
FIG. 12 is a flowchart of another legged robot control method according to an exemplary embodiment.
FIG. 13 is a block diagram illustrating a legged robot control apparatus according to an exemplary embodiment.

## DETAILED DESCRIPTION

Exemplary embodiments will be described in detail herein, examples of which are illustrated in the accompanying drawings. The following description relates to the accompanying drawings, in which like numerals indicate like or similar elements unless otherwise indicated. The following exemplary embodiments are not representative of all embodiments consistent with the present disclosure. Rather, they are merely examples of devices consistent with some aspects of the disclosure as detailed in the appended claims. It should be noted that, in the case of no conflict, the features in the following embodiments and implementations may be combined with each other.

Currently, mobile robots play an increasingly important role in life, providing people with various conveniences. The mobile robots are divided into wheeled, tracked, and legged robots, and use of the wheeled and tracked robots are greatly limited on rough terrain or complex and changeable terrain, for example, mobility on sandy surface or rugged ground is affected. The legged robot can move as long as it contacts the ground. The requirement on the ground is relatively low, and therefore, the legged robots have a better use prospect.

Taking the legged robot being a quadrupedal robot as an example, the existing quadrupedal robot can realize various gait motions. For example, the quadrupedal robot may calculate optimal foot placement by comparing a current posture of the robot with an initial gait to realize stable locomotion of the robot.

In the related art, gait motion of the existing quadrupedal robot is usually obtained by integrating velocity command; when the velocity command is unreasonable, the quadrupedal robot cannot track the velocity, and consequently cannot calculate the placement positions by integration, resulting in unstable motion of the robot.

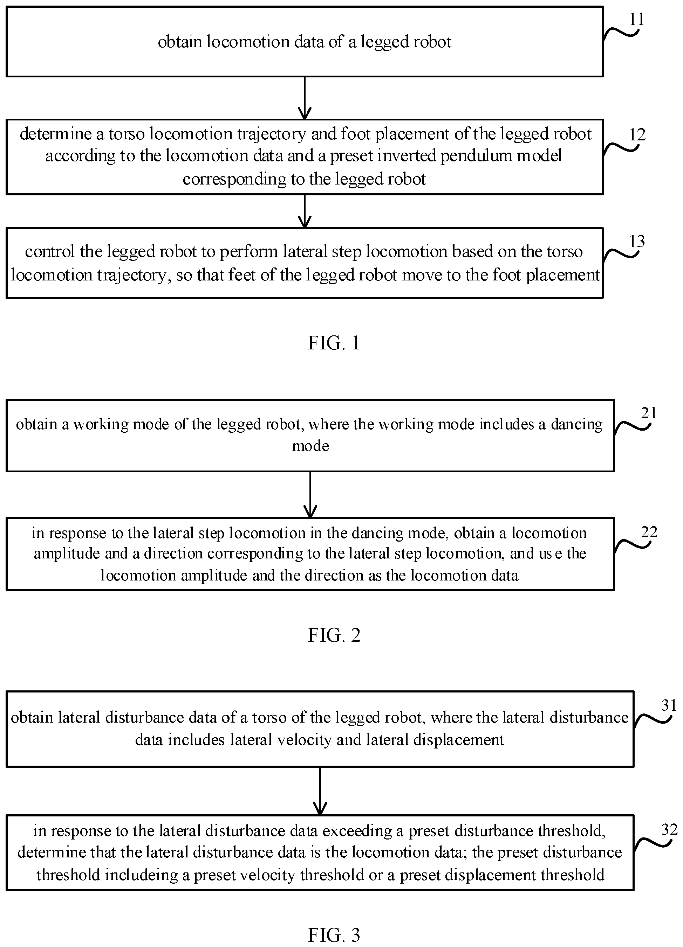

To solve the above technical problems, one or more embodiments of the present disclosure provide a legged robot control method. FIG. 1 is a flowchart of a legged robot control method according to an exemplary embodiment. Referring to FIG. 1, the legged robot control method includes steps 11 to 13.

In step 11, locomotion data of the legged robot is acquired.

In this embodiment, a processor of the legged robot may obtain the locomotion data of the legged robot. The locomotion data may include locomotion data when in a dancing mode, such as amplitude and direction of locomotion, and may further include corresponding lateral disturbance data, such as lateral velocity and lateral displacement, in response to external lateral disturbance. Considering that the legged robot control method provided in the present disclosure provides a solution for a scenario of lateral step locomotion of the legged robot, the above locomotion data only describes the locomotion data when in the dancing mode and subjected to lateral disturbance. A manner of obtaining the locomotion data of the legged robot in a forward walking mode, a backward walking mode, or the like may refer to the related art, and details are not described herein.

Taking the legged robot operating in the dancing mode as an example, referring to FIG. 2, in step 21, the processor may obtain a working mode of the legged robot, and the working mode may include a dancing mode. In step 22, the processor may, in response to the lateral step locomotion in the dancing mode, obtain a locomotion amplitude and direction of the lateral step locomotion and use the locomotion amplitude and direction as the locomotion data. It may be understood that the above locomotion amplitude and direction may be preconfigured and stored in a specified location, for example, a local memory, a cache, an external storage, or a cloud, and the processor may read the locomotion data from the specified location. It should be noted that the locomotion amplitude may be a first target displacement. In this example, the locomotion data corresponding to the lateral step locomotion is obtained from the specified location, which reduces data calculation amount and improves response velocity of the legged robot.

Taking the legged robot operating in a lateral disturbance mode as an example, referring to FIG. 3, in step 31, the processor may obtain lateral disturbance data of the torso of the legged robot; where the lateral disturbance data includes lateral velocity and lateral displacement.

The legged robot may be provided with a velocity sensor, and the velocity sensor may detect a velocity of the torso part of the legged robot. The processor may communicate with the velocity sensor to obtain a lateral velocity uploaded by the velocity sensor. A spatial positioning sensor (such as a GPS sensor or an indoor positioning sensor) may be disposed in the legged robot, and the spatial positioning sensor may detect displacement of the torso part of the legged robot. The processor may communicate with the spatial positioning sensor to obtain a lateral displacement uploaded by the spatial positioning sensor.

It may be understood that, in a case where the legged robot is not provided with a spatial positioning sensor, the sensor may further integrate the velocity reported by the velocity sensor, to obtain the lateral displacement. Those skilled in the art may, according to specific scenarios, choose a manner in which to acquire the lateral disturbance data, and the corresponding scheme falls within the protection scope of the present disclosure.

It should be noted that the lateral velocity refers to the velocity (or velocity component) at which the torso part of the legged robot moves to the left side or the right side of the legged robot. Lateral displacement refers to displacement of the torso part of the legged robot while the feet not leaving the ground when subjected to lateral disturbances.

In step 32, the processor may determine that the lateral disturbance data is locomotion data of the legged robot in response to the lateral disturbance data exceeding a preset disturbance threshold. The preset disturbance threshold includes a preset velocity threshold or a preset displacement threshold. The processor may compare the lateral velocity with the preset velocity threshold, and when the lateral velocity exceeds the preset velocity threshold, determine that the lateral disturbance data is the locomotion data of the legged robot, or when the lateral displacement exceeds the preset displacement threshold, determine that the lateral disturbance data is the locomotion data of the legged robot, or when the lateral velocity and the lateral displacement respectively exceed a corresponding threshold respectively, determine that the lateral disturbance data is the locomotion data of the legged robot. A person of ordinary skill in the art may select a suitable comparison condition according to the specific scene to determine the locomotion data, and the corresponding scheme falls within the protection scope of the present disclosure.

Considering that the locomotion amplitude cannot be accurately known in the case of lateral disturbance, in this example, the lateral velocity and the lateral displacement are obtained as initial data to facilitate calculation of subsequently needed data according to the initial data, to ensure accuracy of control.

In step 12, a torso locomotion trajectory and foot placement of the legged robot are determined according to the locomotion data and a preset inverted pendulum model corresponding to the legged robot.

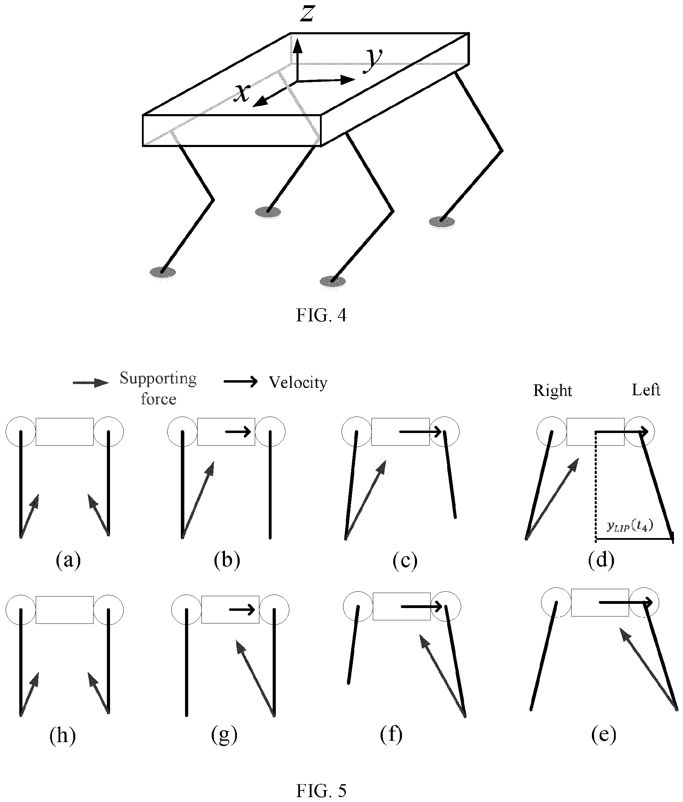

Referring to FIG. 4 and FIG. 5, a process of performing lateral step locomotion by the legged robot includes 8 states, as shown in figures (a) to (f) of FIG. 5. For convenience of description, the states of the legged robot corresponding to figures (a) - (f) are also referred to as a first state to an eighth state, respectively. An (upward) arrow corresponding to feet of the legged robot shown in figures in FIG. 5 represents a supporting force, and a horizontal arrow in the torso part (i.e., rectangular frame) represents velocity of the torso part. Therefore, the process of the lateral step locomotion of the legged robot includes:

(1) In a first state, as shown in figure (a) of FIG. 5, the legged robot is in a standing state, and at this time, supporting forces for a left set of feet and a right set of feet is equal or approximately equal.

(2) A transformation process from the first state to the second state: as shown in figures (a) and (b) in FIG. 5, the supporting force at the left feet becomes zero and the left feet are ready to be lifted; meanwhile, the torso part of the legged robot moves leftwards, that is, the torso part moves to the left.

(3) A transformation process of the second state to the third state and then to the fourth state: as shown in figures (b) to (d) in FIG. 5, the left feet of the legged robot are lifted up and fall to (a desired) foot placement. Meanwhile, to ensure balance of posture of the torso, the lateral velocity of the legged robot continues to increase, as shown in figures b-d of FIG. 5, the black arrows sequentially increase in size. In the fourth state, the left and right feet of the legged robot are grounded, and at this time, the velocity of the torso part is the maximum and the supporting force at the right feet is also the largest.

(4) A transformation process of the fourth state to the fifth state: as shown in figures (d) and (e) in FIG. 5, the supporting force at the right feet of the legged robot is reduced to zero, and meanwhile the supporting force at the left feet is increased. At this time, the velocity of the torso part of the legged robot is the largest.

It may be understood that the velocity of the fourth state is same as the velocity of the fifth state, and the displacement of the fourth state is same as the displacement of the fifth state. The velocity and the displacement between the two states may implement switching of parameters between two inverted pendulum models, which is not described herein.

(5) A process from the fifth state to the sixth state and then to the seventh state: as shown in figures (e) to (g) of FIG. 5, similar to the transformation process from the second state to the third state and then to the fourth state, the feet on the right side of the legged robot are lifted and swing to the foot placement in the standing state, and the lateral velocity of the torso part gradually decreases. When the right feet touch the ground, the velocity of the torso is exactly zero, that is, the torso velocity at the landing moment of the feet is zero.

(6) The eighth state: as shown in figure (h) of FIG. 5, the legged robot is in a standing state same as the standing state at the first state, and a difference lies in that the standing position changes. The time during which the first state and the eighth state are in the standing state is very short (milliseconds to hundreds of milliseconds), which is to make the velocity of the legged robot zero and make the legged robot prepared to slide to the right (or left).

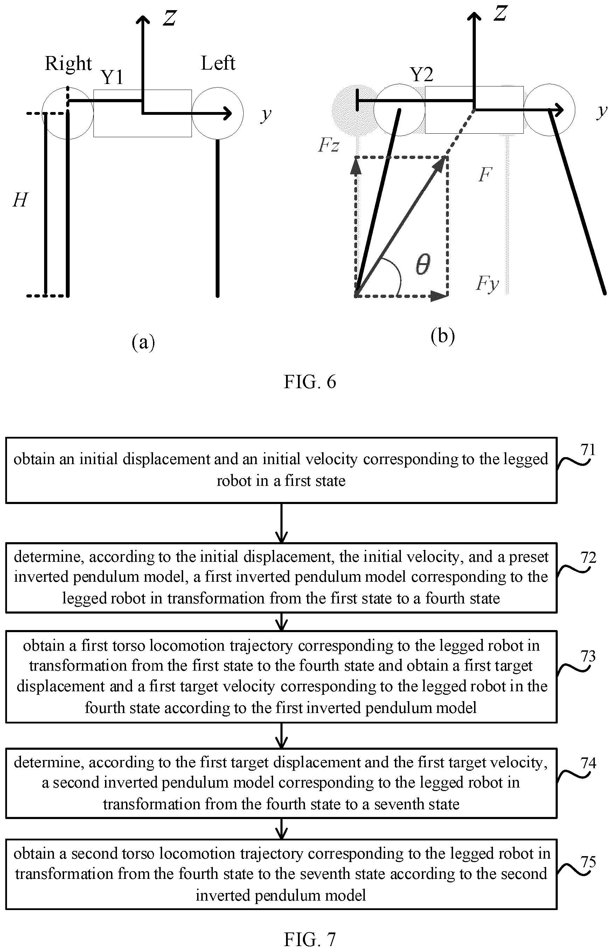

For convenience of analysis, when the legged robot is supported on the feet on a same side thereof, the legged robot can be equivalent to a simplified single rigid body model, and FIG. 6 is a schematic diagram of force distribution on the simplified single rigid body model. Referring to FIG. 6, denote $[x_{index}, y_{index}, z_{index}]$ (index= FL, FR, RL, RR), for which FL, FR, RL, RR indicate positions of the left front foot, the right front foot, the left rear foot and the right rear foot relative to the torso system. With FL-RR and FL-RL provide support as examples, the corresponding force distribution matrices are shown in Equation (1) and Equation (2).

$$L_{FL-RR} = \begin{bmatrix} 1 & 0 & 0 & 1 & 0 & 0 \\ 0 & 1 & 0 & 0 & 1 & 0 \\ 0 & 0 & 1 & 0 & 0 & 1 \\ 0 & -z_{FL} & y_{FL} & 0 & -z_{RR} & y_{RR} \\ z_{FL} & 0 & -x_{FL} & z_{RR} & 0 & -x_{RR} \\ -y_{FL} & x_{FL} & 0 & -y_{RR} & x_{RR} & 0 \end{bmatrix} \tag{1}$$

$$L_{FL-RL} = \begin{bmatrix} 1 & 0 & 0 & 1 & 0 & 0 \\ 0 & 1 & 0 & 0 & 1 & 0 \\ 0 & 0 & 1 & 0 & 0 & 1 \\ 0 & -z_{FL} & y_{FL} & 0 & -z_{RL} & y_{RL} \\ z_{FL} & 0 & -x_{FL} & z_{RL} & 0 & -x_{RL} \\ -y_{FL} & x_{FL} & 0 & -y_{RL} & x_{RL} & 0 \end{bmatrix} \tag{2}$$

where the Equation (1) and the Equation (2) represent a mapping relationship between the supporting force from the feet of the legged robot and a virtual force on the torso part. That is, the torso part needs a lateral force to generate a lateral velocity. The lateral force cannot be directly generated by the torso part, and the supporting force from the feet is needed to provide a component as the virtual force for driving the torso part. With the supporting force from the feet determined, by combining with Equation (2), the virtual force for the torso part can be determined. Therefore, both the supporting force from the feet $F_{feet} \in R^{6 \times 1}$ and the virtual force $F_{torso} \in R^{6 \times 1}$ to which the torso part is subjected cause the torso part to generate the same velocity (or acceleration), and the mathematical expression is $LF_{feet} = F_{troso}$, where L represents the Equation (1) or Equation (2).

For Equation (1), a rank of $L_{FL-RR}$ is 5. For any n rows of first five rows, the rank is n (n < 5), and a rank of rows 2 to 4 is 3. For Equation (2), a rank of $L_{FL-RL}$ is 5, although the rank of the first 5 rows is 4, the rank of rows 2 to 4 is 2. Based on the above analysis, it can be seen that the 5 dimensions in $L_{FL-RR}$, that is, x displacement, y displacement, z displacement, a pitch angle (rotation about the y-axis) and a roll angle (rotated about the x axis), are mutually coupled, allowing execution effect of these five dimensions to be adjusted through weights. In contrast, only 3 dimensions in $L_{FL-RL}$, that is, y displacement, z displacement and roll angle are mutually coupled, being independent of the other 3 dimensions.

Considering in the lateral step locomotion, a height of the torso part (the z-axis direction shown in FIG. 4) of the legged robot and the roll angle (around the x axis as shown in FIG. 4) are to be fixed, so that the lateral velocity of the legged robot cannot be controlled, and the execution effect of each dimension cannot be adjusted through weight as in diagonal gait. In this case, the legged robot operates as an underactuated system, making it not feasible to use the diagonal gait control method to adjust locomotion of the legged robot. Considering the torso posture and the vertical height are controlled in the lateral step/stride process, in this embodiment, the lateral step locomotion process of the legged robot is regarded as a linear inverted pendulum model, that is, a preset inverted pendulum model corresponding to the legged robot may be stored in a designated position in the legged robot.

Continuing in taking the dancing mode as an example, that the processor may determine the torso locomotion trajectory and the foot placement of the legged robot according to the locomotion data and the preset inverted pendulum model corresponding to the legged robot, as shown in FIG. 7, includes steps 71 to 75.

In step 71, the processor may obtain an initial displacement and an initial velocity corresponding to the legged robot in the first state.

Denote $y_{LIP}(0)$ and $\dot{y}_{LIP}(0)$ as the horizontal position and velocity of the torso part in the first state. In the first state, the legged robot is in a standing state, so $y_{LIP}(0) = Y_1$, $\dot{y}_{LIP}(0) = 0$. That is, the processor may obtain the initial displacement and initial velocity.

In step 72, the processor may determine a first inverted pendulum model corresponding to the legged robot in transformation from the first state to the fourth state according to the initial displacement, the initial velocity, and the preset inverted pendulum model. The first state refers to the standing state before the lateral step locomotion of the legged robot, as shown in figure (a) of FIG. 6. The fourth state refers to a state in which the feet on a first side touch the ground after taking a step while the feet on a second side have not taken a step yet and the feet on both sides are simultaneously grounded when the legged robot performs lateral step locomotion according to the direction, as shown in figure (d) of FIG. 6.

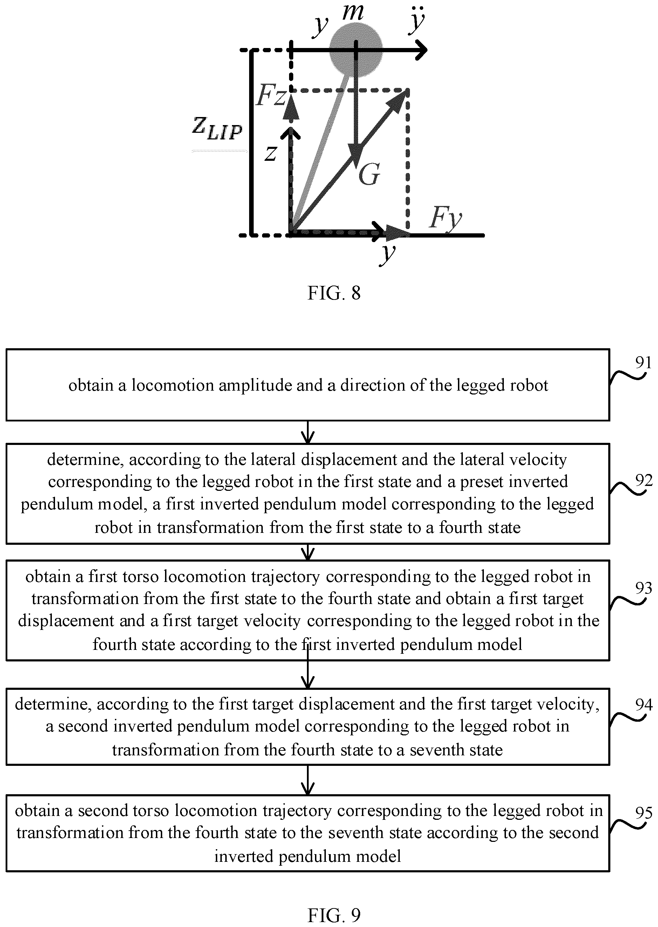

In this step, the processor may equivalently represent the legged robot as a linear inverted pendulum model. Referring to FIG. 8, the linear inverted pendulum model may be regarded as a torso part with a mass m and a leg without mass and with variable length. A height of the torso part in the horizontal direction is unchanged, so the weight of the torso part is equal to the force in the Z-axis direction. For the feet supporting point, it can be known that $m\ddot{y}_{LIP}z_{LIP} = mgy_{LIP}$ from moment equilibrium/balance.

In this step, after determining the initial displacement and the initial velocity, the processor may obtain the first inverted pendulum model. Based on the above first inverted pendulum model, Equations (3) to (5) can be obtained:

$$\ddot{y}_{LIP} = \lambda y_{LIP};\qquad(3)$$

$$y_{LIP}(t - t_1) = c_1 e^{\lambda(t-t_1)} + c_2 e^{-\lambda(t-t_1)};\qquad(4)$$

$$\dot{y}_{LIP}(t - t_1) = \lambda(c_1 e^{\lambda(t-t_1)} - c_2 e^{-\lambda(t-t_1)});\qquad(5)$$

where,

$$\lambda = \sqrt{\frac{g}{z_{LIP}}};$$

$$c_1 = \frac{1}{2}\left(y_{LIP}(0) + \frac{1}{\lambda}\dot{y}_{LIP}(0)\right);$$

$$c_2 = \frac{1}{2}\left(y_{LIP}(0) - \frac{1}{\lambda}\dot{y}_{LIP}(0)\right).$$

In Equations (3) to (5), $g$ represents gravity acceleration, $y_{LIP}$ represents a displacement in y-axis direction (that is, a first target displacement hereinafter), $z_{LIP}$ represents height, $\ddot{y}_{LIP}$ represents an acceleration of the torso part, and m represents a mass of the torso part.

In step 73, according to the first inverted pendulum model, a first torso locomotion trajectory of the legged robot in transformation from the first state to the fourth state is acquired and a first target displacement and a first target velocity corresponding to the legged robot in the fourth state are acquired; where the first target displacement is equal to the locomotion amplitude and a position corresponding to the first target displacement is used as the foot placement.

In this step, with continued reference to FIG. 6, locomotion of the legged robot from the first state to second state, third state and fourth state is a movement process of a linear inverted pendulum, and in the fourth state $y_{LIP}(t_4 - t_1) = Y_2$ is obtained and $t_4 - t_1$ is calculated. Please refer to Equation (6) and Equation (7), respectively.

$$Y_2 = c_1 e^{\lambda(t_4-t_1)} + c_2 e^{-\lambda(t_4-t_1)};\qquad(6)$$

The derivation process of Equation (6) is as follows:

$$Y_2 = c_1 X + c_2 X^{-1};$$

$$Y_2 X = c_1 X^2 + c_2;$$

$$\frac{Y_2^2}{4c_1} - c_2 = c_1\left(X^2 - \frac{Y_2}{c_1}X + \frac{Y_2^2}{4c_1^2}\right);$$

$$\frac{Y_2^2}{4c_1^2} - \frac{c_2}{c_1} = \left(X - \frac{Y_2}{2c_1}\right)^2;$$

$$X - \frac{Y_2}{2c_1} = \pm\sqrt{\frac{Y_2^2}{4c_1^2} - \frac{c_2}{c_1}};$$

$$X = \pm\sqrt{\frac{Y_2^2}{4c_1^2} - \frac{c_2}{c_1}} + \frac{Y_2}{2c_1};$$

In this example, X with a relatively small value is more reasonable.

$$e^{\lambda(t_4 - t_1)} = X = -\sqrt{\frac{Y_2^2}{4c_1^2} - \frac{c_2}{c_1}} + \frac{Y_2}{2c_1};$$

$$t_4 - t_1 = \frac{1}{\lambda}\ln\left(-\sqrt{\frac{Y_2^2}{4c_1^2} - \frac{c_2}{c_1}} + \frac{Y_2}{2c_1}\right). \qquad (7)$$

In this way, after $t_4 - t_1$ is calculated, the processor may calculate the first target displacement $y_{LIP}(t_4 - t_1)$ and the first target velocity $\dot{y}_{LIP}(t_4 - t_1)$ corresponding to the legged robot. In the equations, $t_i$ (i = 1... 8).

In addition, Equation (4) and Equation (5) serve as corresponding displacement trajectory and velocity trajectory of the legged robot in the transformation process from the first state to the fourth state, and the displacement trajectory and the velocity trajectory constitute the first torso locomotion trajectory.

In step 74, a second inverted pendulum model corresponding to the legged robot in transformation from the fourth state to the seventh state is determined according to the first target displacement and the first target velocity, where the seventh state refers to a state in which the feet of the legged robot on the second side touch the ground after taking a step and the feet on two sides are simultaneously grounded.

In this step, the transformation process of the processor from the fifth state to the sixth state and then to the seventh state may be considered as another linear inverted pendulum model with the left feet as a fulcrum, that is, the second inverted pendulum model. Initial data of the second inverted pendulum model is the data of the first inverted pendulum model at a moment $t_4 - t_1$, that is, the first target displacement and the first target velocity. Moreover, the lateral step locomotion in turn requires the velocity to drop to zero in the seventh state, i.e., $\dot{y}_{LIP}(t_7) = 0$. Thus, the second inverted pendulum model is shown as follows:

$$0 = \lambda\left(c_3 e^{\lambda(t_7 - t_4)} - c_4 e^{-\lambda(t_7 - t_4)}\right); \qquad (8)$$

$$c_3 = \frac{1}{2}\left(y_{LIP}(t_4 - t_1) + \frac{1}{\lambda}\dot{y}_{LIP}(t_4 - t_1)\right); \qquad (9)$$

$$c_4 = \frac{1}{2}\left(y_{LIP}(t_4 - t_1) - \frac{1}{\lambda}\dot{y}_{LIP}(t_4 - t_1)\right); \qquad (10)$$

Resulting

$$Y_2 = y_{LIP}(t_4 - t_1) = K_{LIP}\dot{y}_{LIP}(t_4 - t_1); \qquad (11)$$

$$K_{LIP} = \frac{e^{2\lambda(t_7 - t_4)} + 1}{\lambda(1 - e^{2\lambda(t_7 - t_4)})}.$$

In step 75, a second torso locomotion trajectory corresponding to the legged robot in transformation from the fourth state to the seventh state is obtained according to the second inverted pendulum model; and a torso locomotion trajectory of the legged robot includes the first torso locomotion trajectory and the second torso locomotion trajectory.

In this step, since the first state to the fourth state are symmetrical to the fifth state to the eighth state, it is obtained that

$$t_4 - t_1 = t_7 - t_4.$$

Assuming $t_1$ and $t_8$-$t_7$ are set to a default value $T_{stand}$, the time of an entire lateral step locomotion $t_8$ can be calculated to:

$$t_8 = 2(t_4 - t_1) + 2T_{stand}; \qquad (12)$$

The displacement trajectory and the velocity trajectory corresponding to the fourth state to the seventh state are as shown in Equation (13) and Equation (14), where the displacement trajectory and the velocity trajectory constitute the second torso locomotion trajectory:

$$y_{LIP}(t) = c_3 e^{\lambda(t-t_4)} + c_4 e^{-\lambda(t-t_4)}; \qquad (13)$$

$$\dot{y}_{LIP}(t) = \lambda(c_1 e^{\lambda(t-t_4)} - c_2 e^{-\lambda(t-t_4)}). \qquad (14)$$

In practical applications, the locomotion amplitude of the legged robot during lateral step locomotion usually meets requirements, that is, the locomotion amplitude is less than $2Y_2$. With continued reference to FIG. 5, the support of the left legs and the right legs of the legged robot during the lateral step process is symmetrical, and when the legged robot reaches the state shown in figure (b) in FIG. 5 (that is, the fourth state shown in FIG. 6), that is, when a span of the feet on both sides is the largest (or an angle between the two legs is the largest), the torso part moves by the displacement $Y_2$. It is known that the height of the torso part is H (or $Z_{LIP}$), a horizontal distance from a center of the torso to a bottom of leg on the right side is $Y_1$, and the height H of the legged robot during the lateral step process is substantially constant. When the feet on the two sides of the legged robot are farthest from each other, the supporting force of the feet at the right side of the legged robot is F. If an angle $\theta$ is relatively small, that is, $Y_2$ is relatively large, the supporting force F may overcome limitation of a friction cone and the robot slips on the ground. If a friction coefficient of the ground is $\mu$, $\mu = F_y/F_z = Y_2/H$, that is, $Y_2 = \mu H$. When the legged robot walks on road surface, a default friction coefficient of the legged robot is $\mu_{default}$, and a user can change the friction coefficient according to actual situation, thereby modifying the value of $Y_2$. When the locomotion amplitude is greater than $2Y_2$, the legged robot reminds the user that "over a maximum value, whether to execute the maximum value?". If the user selects "No", task stops; if "yes" is selected, the locomotion amplitude is updated to the maximum value to continue the task. In this way, in the present embodiment, it can be ensured that the legged robot can reliably take a lateral step while ensure the stability of the lateral stride.

Continuing in taking the lateral disturbance mode as an example, that the processor may determine the torso locomotion trajectory and the foot placement of the legged robot according to the locomotion data and the preset inverted pendulum model corresponding to the legged robot, as shown in FIG. 9, includes steps 91 to 95.

In step 91, a locomotion amplitude and a direction of the legged robot are acquired.

In this step, when the legged robot is subjected to lateral disturbance, in the first state, the velocity of the torso part is no longer zero and the displacement is not zero, and the locomotion amplitude is no longer a preset value. In this case, the processor may calculate the locomotion amplitude according to the initial velocity and the initial displacement of the torso part.

In this step, it is assumed that $t_4$-$t_1$ = $t_7$-$t_4$ = $T$ by default, the processor may calculate $K_{LIP}$ according to Equation (11); and then, when $K_{LIP}$ and $t_4$-$t_1$ are known, $Y_2$ is calculated according to Equation (11), that is, the locomotion amplitude is obtained. In addition, the direction of the lateral step locomotion may be determined according to an external force of lateral disturbance.

In step 92, a first inverted pendulum model corresponding to the legged robot in transformation from the first state to the fourth state may be determined according to the lateral displacement and the lateral velocity corresponding to the legged robot in the first state, and the preset inverted pendulum model. The first state refers to the standing state before the lateral step locomotion of the legged robot. The fourth state refers to a state in which the feet on a first side touch the ground after taking a step while the feet on a second side have not taken a step yet and the feet on both sides are simultaneously grounded when the legged robot performs lateral step locomotion according to the direction.

In this step, the solution in step 92 is same as that in step 72, and reference may be made to the content of step 72, and details are not described herein again.

In step 93, according to the first inverted pendulum model, a first torso locomotion trajectory corresponding to the legged robot in transformation from the first state to the fourth state is acquired and a first target displacement and a first target velocity corresponding to the legged robot in the fourth state are acquired; where the first target displacement is equal to the locomotion amplitude and a position corresponding to the first target displacement is used as the foot placement.

In this step, the solution in step 93 is the same as that in step 73, and reference may be made to the content of step 73, and details are not described herein again.

In step 94, a second inverted pendulum model corresponding to the legged robot in transformation from the fourth state to the seventh state is determined according to the first target displacement and the first target velocity; where the seventh state refers to a state in which the feet of the legged robot on the second side touch the ground after taking a step and the feet on the two sides are simultaneously grounded.

In this step, the solution in step 94 is same as that in step 74, and reference may be made to the content of step 74, and details are not described herein again.

In step 95, a second torso locomotion trajectory corresponding to the legged robot in transformation from the fourth state to the seventh state is obtained according to the second inverted pendulum model; and a torso locomotion trajectory of the legged robot includes the first torso locomotion trajectory and the second torso locomotion trajectory.

In this step, the solution in step 95 is the same as that in step 75, and reference may be made to the content of step 75, and details are not described herein again.

In step 13, the legged robot is controlled to perform lateral step locomotion based on the torso locomotion trajectory, so that the feet of the legged robot move to the foot placement. It can be understood that the legged robot calculates the displacement and the velocity at each moment according to the motion trajectory of the torso, controls the torso to reach the position corresponding to the displacement and the velocity, and finally moves the feet of the legged robot to the foot placement to achieve the effect of lateral step locomotion.

Considering that the legged robot is approximated to a linear inverted pendulum, there may be some deviation between the first inverted pendulum model and the second inverted pendulum model, in an example of the present disclosure, the first target displacement $y_{LIP}(t_4 - t_1)$ and the first target velocity $\dot{y}_{LIP}(t_4 - t_1)$ may be calculated using Equations (4) and (5) with each moment treated as the initial moment.

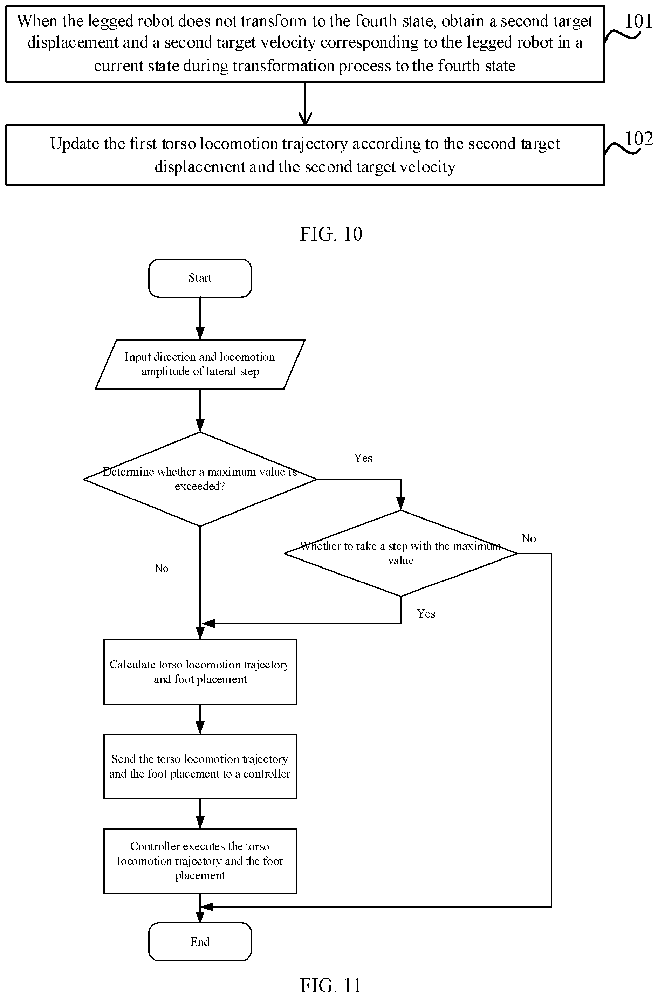

Referring to FIG. 10, in step 101, when the legged robot has not transformed to the fourth state, the processor may obtain a second target displacement and a second target velocity corresponding to a current state of the legged robot during a process of transformation to the fourth state. That is, the processor calculates current displacement and velocity according to the first torso locomotion trajectory. In step 102, the processor may update the first torso locomotion trajectory according to the second target displacement and the second target velocity. With continued reference to Equations (4) and (5), in the case where the second target displacement and the second target velocity are known, the parameters $C_1$ and $C_2$ may be calculated, that is, updating $y_{LIP}(0)$ in the parameters $C_1$ and $C_2$ to $Y_{LIP}(t - t_1)$, and updating $\dot{y}_{LIP}(0)$ to $\dot{y}_{LIP}(t - t_1)$ where t is a current time. Then, the updated parameters $C_1$ and $C_2$ are used to update the Equations (4) and (5), that is, the first torso locomotion trajectory is updated as:

$$y_{LIP}(t - t_1') = c_1 e^{\lambda(t-t_1')} + c_2 e^{-\lambda(t-t_1')};$$

$$\dot{y}_{LIP}(t - t_1') = \lambda(c_1 e^{\lambda(t-t_1')} - c_2 e^{-\lambda(t-t_1')}).$$

It can be understood that $t_1$ in the updated first torso locomotion trajectory becomes $t_1'$ to compensate for a time that has already been spent in moving, that is, the updated first torso locomotion trajectory is recalculated with the current moment as the starting point. After the first torso locomotion trajectory is updated, the second torso locomotion trajectory also changes synchronously, and details are not described herein again. In this way, in this example, the first torso locomotion trajectory is updated in real time, more accurate first target displacement and first target velocity can be obtained. A deviation caused by the equivalent model can be corrected, and control precision is improved.

At this point, the solution provided by the embodiments of the present disclosure may obtain locomotion data of the legged robot; determine a torso locomotion trajectory and foot placement of the legged robot according to the locomotion data and a preset inverted pendulum model corresponding to the legged robot; and control the legged robot to perform lateral step locomotion based on the torso locomotion trajectory, so that the feet of the legged robot move to the foot placement. In this way, in this embodiment, the legged robot is used as an inverted pendulum to obtain the preset inverted pendulum model corresponding to the legged robot; and in combination with the locomotion data of the legged robot and the preset inverted pendulum model, the torso locomotion trajectory and the foot placement meeting the dynamic requirements of the legged robot can be generated, so that the actual locomotion of the legged robot in the lateral step locomotion matches the above torso locomotion trajectory, and the stability of the lateral step locomotion of the legged robot is improved.

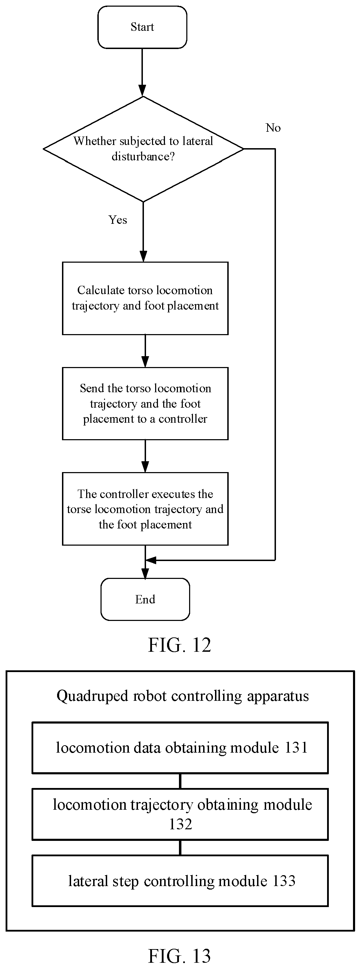

One or more embodiments of the present disclosure provide a control flow of a specific scenario, as shown in FIG. 11 and FIG. 12.

Referring to FIG. 11, the processor of the legged robot may obtain a lateral step direction and a step amplitude.

The processor may then determine whether the step amplitude exceeds a maximum value of the step amplitude.

If the step amplitude exceeds the maximum value, information indicating whether to take a step with the maximum value is displayed; when a result is no, the task is terminated; when the result is yes, the processor may calculate the torso locomotion trajectory and the foot placement. When tracking amplitude is less than the maximum value, the processor may calculate the torso locomotion trajectory and the foot placement.

The processor may send the torso locomotion trajectory and the foot placement to a controller. The controller may control the legged robot to perform lateral step locomotion according to the torso locomotion trajectory, and finally the feet are moved to the foot placement, and the task ends.

Referring to FIG. 12, the initial state of the legged robot is standing on the four feet in a balanced way, and meanwhile, the processor may determine whether the legged robot is being subjected to lateral disturbance. A determination condition of being subjected to lateral disturbance is that a lateral displacement y exceeds a lateral displacement threshold Y, that is, $y \geq Y$, or a lateral velocity is greater than a lateral velocity threshold, that is, $\dot{y} \geq \dot{Y}$. The lateral displacement threshold and the lateral velocity threshold $Y, \dot{Y}$ may be set empirically, and the user may also modify the threshold according to their own needs.

A process of lateral step locomotion of the legged robot after being laterally disturbed is still as shown in FIG. 6, and a difference is that the initial state of the legged robot when starting the lateral step is no longer fixed, that is, $y_{LIP}(0) \neq 0$ and $\dot{y}_{LIP}(0) \neq 0$. In this case, the processor calculates locomotion amplitude by using the solution in step 91, and calculates the first torso locomotion trajectory of the torso part when the right legs provide support by using the solution in step 92.

In the lateral disturbance (i.e., on-site disturbance rejection mode), since the amplitude of the lateral step, that is, the locomotion amplitude, is unknown, and the time $t_4$ cannot be calculated, in this example, it is assumed by default that $t_4 - t_1 = t_7 - t_4 = T$. Then, the processor obtains foot placement with the velocity of the legged robot being zero according to the Equations (8) to (11), and calculates the second torso locomotion trajectory of the torso part when the left legs provide support according to the Equations (13) and (14).

Finally, the processor may input the torso locomotion trajectory and the foot placement into the controller, and the controller controls the robot to perform the locomotion trajectory and the foot placement.

Based on the legged robot control method provided by the embodiments of the present disclosure, one or more embodiments of the present disclosure further provide a legged robot control apparatus. Referring to FIG. 13, the apparatus includes:

a locomotion data obtaining module 131, configured to obtain locomotion data of the legged robot;
a locomotion trajectory obtaining module 132, configured to determine a torso locomotion trajectory and foot placement of the legged robot according to the locomotion data and a preset inverted pendulum model corresponding to the legged robot;
a lateral step controlling module 133, configured to control the legged robot to perform lateral step locomotion based on the torso locomotion trajectory, so that feet of the legged robot move to the foot placement.

In an embodiment, the locomotion data obtaining module includes:

a working mode obtaining unit, configured to obtain a working mode of the legged robot, where the working mode includes a dancing mode;
a locomotion data obtaining unit, configured to, in response to a lateral step locomotion when in the dancing mode, obtain a locomotion amplitude and a direction corresponding to the lateral step locomotion, and use the locomotion amplitude and the direction as the locomotion data.

In an embodiment, the locomotion trajectory obtaining module includes:

an initial data obtaining unit, configured to obtain an initial displacement and an initial velocity corresponding to the legged robot in a first state;
a first model determining unit, configured to determine, according to the initial displacement, the initial velocity, and the preset inverted pendulum model, a first inverted pendulum model corresponding to the legged robot in transformation from the first state to a fourth state; where the first state refers to a standing state before the lateral step locomotion of the legged robot, and the fourth state refers to a state where feet on a first side touch the ground after taking a step while feet on a second side have not taken a step yet with the feet on the two sides are simultaneously grounded when the legged robot performs lateral step locomotion in the direction;
a first trajectory obtaining unit, configured to according to the first inverted pendulum model, obtain a first torso locomotion trajectory corresponding to the legged robot in transformation from the first state to the fourth state, and obtain a first target displacement and a first target velocity corresponding to the legged robot in the fourth state; where the first target displacement is equal to the locomotion amplitude and a position corresponding to the first target displacement is used as the foot placement;

a second model determining unit, configured to determine, according to the first target displacement and the first target velocity, a second inverted pendulum model corresponding to the legged robot in transformation from the fourth state to a seventh state; where the seventh state refers to a state in which the feet on the second side of the legged robot touch the ground after taking a step and the feet on both sides are simultaneously grounded;

a second trajectory obtaining unit, configured to obtain a second torso locomotion trajectory corresponding to the legged robot in transformation from the fourth state to the seventh state according to the second inverted pendulum model;

a torso locomotion trajectory of the legged robot includes the first torso locomotion trajectory and the second torso locomotion trajectory.

In an embodiment, the locomotion data obtaining module includes:

a disturbance data obtaining unit, configured to obtain lateral disturbance data of the torso of the legged robot, where the lateral disturbance data includes lateral velocity and lateral displacement;

a locomotion data determining unit, configured to determine that the lateral disturbance data is the locomotion data in response to the lateral disturbance data exceeding a preset disturbance threshold; where the preset disturbance threshold includes a preset velocity threshold or a preset displacement threshold.

In an embodiment, the locomotion trajectory obtaining module includes:

an amplitude and direction obtaining unit, configured to obtain a locomotion amplitude and a direction of the legged robot;

a first model determining unit, configured to determine, according to the lateral displacement and the lateral velocity corresponding to the legged robot in the first state and a preset inverted pendulum model, a first inverted pendulum model corresponding to the legged robot in transformation from a first state to a fourth state; where the first state refers to a standing state before the lateral step locomotion of the legged robot, and the fourth state refers to a state in which feet on a first side touch the ground after taking a step while feet on a second side have not taken a step yet and the feet on the two sides are simultaneously grounded when the legged robot performs lateral step locomotion in the direction;

a first trajectory obtaining unit, configured to according to the first inverted pendulum model, obtain a first torso locomotion trajectory corresponding to the legged robot in transformation from the first state to the fourth state and obtain a first target displacement and a first target velocity corresponding to the legged robot in the fourth state; where the first target displacement is equal to the locomotion amplitude and a position corresponding to the first target displacement is used as the foot placement;

a second model determining unit, configured to determine, according to the first target displacement and the first target velocity, a second inverted pendulum model corresponding to the legged robot in transformation from the fourth state to a seventh state; where the seventh state refers to a state in which the feet on the second side touch the ground after taking a step and the feet on both sides are all grounded simultaneously;

a second trajectory obtaining unit, configured to obtain a second torso locomotion trajectory corresponding to the legged robot in transformation from the fourth state to the seventh state according to the second inverted pendulum model;

a torso locomotion trajectory of the legged robot includes the first torso locomotion trajectory and the second torso locomotion trajectory.

In an embodiment, the locomotion trajectory obtaining module further includes:

a second displacement obtaining unit, configured to obtain a second target displacement and a second target velocity corresponding to a current state of the legged robot during transformation process to the fourth state when the legged robot has not transformed to the fourth state;

a first trajectory updating unit, configured to update the first torso locomotion trajectory according to the second target displacement and the second target velocity.

It should be noted that, the apparatus shown in these embodiments matches the content of the method embodiments, and reference may be made to the content of the foregoing method embodiments, and details are not described herein again.

In an exemplary embodiment, a legged robot is further provided, including:

a memory and a processor;

the memory is configured to store one or more computer programs executable by the processor;
the processor is configured to execute the computer programs in the memory to implement the foregoing method.

In an exemplary embodiment, a computer-readable storage medium is further provided, for example, a memory including commands, where the executable computer program may be executed by a processor. The readable storage medium may be a ROM, a random access memory (RAM), a CD-ROM, a magnetic tape, a floppy disk, an optical data storage device, or the like.

Other embodiments of the disclosure will be readily apparent to those skilled in the art upon consideration of the specification and practice of the disclosure disclosed herein. The present disclosure is intended to cover any variations, uses, or adaptations that follow the general principles of the present disclosure and include common or customary means in the art that are not disclosed in the present disclosure. The specification and the embodiments are to be regarded as exemplary only, and the true scope and spirit of the present disclosure are indicated by the following claims.

It should be understood that the present disclosure is not limited to the precise structures already described above and shown in the drawings, and that various modifications and changes may be made without departing from the scope thereof. The scope of the present disclosure is limited only by the appended claims.

## Claims

1. A legged robot control method, comprising:

    obtaining locomotion data of the legged robot;
    determining a torso locomotion trajectory and foot placement of the legged robot according to the locomotion data and a preset inverted pendulum model corresponding to the legged robot; and
    controlling the legged robot to perform lateral step locomotion based on the torso locomotion trajectory, such that feet of the legged robot move to the foot placement.

2. The method according to claim 1, wherein obtaining the locomotion data of the legged robot comprises:

    obtaining a working mode of the legged robot, wherein the working mode includes a dancing mode; and
    in response to the lateral step locomotion in the dancing mode, obtaining a locomotion amplitude and a direction corresponding to the lateral step locomotion, and using the locomotion amplitude and the direction as the locomotion data.

3. The method according to claim 2, wherein determining the torso locomotion trajectory and the foot placement of the legged robot according to the locomotion data and the preset inverted pendulum model corresponding to the legged robot comprises:

    obtaining an initial displacement and an initial velocity corresponding to the legged robot in a first state;
    determining, according to the initial displacement, the initial velocity, and the preset inverted pendulum model, a first inverted pendulum model corresponding to the legged robot in transformation from the first state to a fourth state,
    wherein the first state refers to a standing state of the legged robot before the lateral step locomotion, and the fourth state refers to a state in which feet on a first side touch a ground after taking a step while feet on a second side have not taken a step yet and the feet on the two sides are simultaneously grounded when the legged robot performs lateral step locomotion in the direction;
    according to the first inverted pendulum model, obtaining a first torso locomotion trajectory corresponding to the legged robot in transformation from the first state to the fourth state and obtaining a first target displacement and a first target velocity corresponding to the legged robot in the fourth state,
    wherein the first target displacement is equal to the locomotion amplitude and a position corresponding to the first target displacement is used as the foot placement;
    determining, according to the first target displacement and the first target velocity, a second inverted pendulum model corresponding to the legged robot in transformation from the fourth state to a seventh state,
    wherein the seventh state refers to a state in which the feet on the second side of the legged robot touch the ground after taking a step and the feet on the two sides are grounded simultaneously; and
    obtaining a second torso locomotion trajectory corresponding to the legged robot in transformation from the fourth state to the seventh state according to the second inverted pendulum model, and

wherein the torso locomotion trajectory of the legged robot includes the first torso locomotion trajectory and the second torso locomotion trajectory.

4. The method according to claim 1, wherein obtaining the locomotion data of the legged robot comprises:

obtaining lateral disturbance data of a torso of the legged robot, wherein the lateral disturbance data includes lateral velocity and lateral displacement; and
in response to the lateral disturbance data exceeding a preset disturbance threshold, determining that the lateral disturbance data is the locomotion data, wherein the preset disturbance threshold comprises a preset velocity threshold or a preset displacement threshold.

5. The method according to claim 4, wherein determining the torso locomotion trajectory and the foot placement of the legged robot according to the locomotion data and the preset inverted pendulum model corresponding to the legged robot comprises:

obtaining a locomotion amplitude and a direction of the legged robot;
determining, according to the lateral displacement and the lateral velocity corresponding to the legged robot in a first state and the preset inverted pendulum model, a first inverted pendulum model corresponding to the legged robot in transformation from the first state to a fourth state,
wherein the first state refers to a standing state of the legged robot before the lateral step locomotion, and the fourth state refers to a state in which feet on a first side touch a ground after taking a step while feet on a second side have not taken a step yet and the feet on the two sides are simultaneously grounded when the legged robot performs lateral step locomotion in the direction;
according to the first inverted pendulum model, obtaining a first torso locomotion trajectory corresponding to the legged robot in transformation from the first state to the fourth state and obtaining a first target displacement and a first target velocity corresponding to the legged robot in the fourth state,
wherein the first target displacement is equal to the locomotion amplitude and a position corresponding to the first target displacement is used as the foot placement;
determining, according to the first target displacement and the first target velocity, a second inverted pendulum model corresponding to the legged robot in transformation from the fourth state to a seventh state,
wherein the seventh state refers to a state in which the feet on the second side of the legged robot touch the ground after taking a step and the feet on the two sides are grounded simultaneously; and
obtaining a second torso locomotion trajectory corresponding to the legged robot in transformation from the fourth state to the seventh state according to the second inverted pendulum model and

wherein the torso locomotion trajectory of the legged robot comprises the first torso locomotion trajectory and the second torso locomotion trajectory.

6. The method according to claim 3 or 5, further comprising:

obtaining a second target displacement and a second target velocity corresponding to the legged robot in a current state during a transformation process to the fourth state when the legged robot has not transformed to the fourth state; and
updating the first torso locomotion trajectory according to the second target displacement and the second target velocity.

7. A legged robot control device, comprising:

a locomotion data obtaining module, configured to obtain locomotion data of the legged robot;
a locomotion trajectory obtaining module, configured to determine a torso locomotion trajectory and foot placement of the legged robot according to the locomotion data and a preset inverted pendulum model corresponding to the legged robot;
a lateral step controlling module, configured to control the legged robot to perform lateral step locomotion based on the torso locomotion trajectory, so that feet of the legged robot move to the foot placement.

8. The apparatus according to claim 7, wherein the locomotion data obtaining module comprises:

a working mode obtaining unit, configured to obtain a working mode of the legged robot, where the working mode includes a dancing mode;

a locomotion data obtaining unit, configured to, in response to a lateral step locomotion in the dancing mode, obtain a locomotion amplitude and a direction corresponding to the lateral step locomotion, and use the locomotion amplitude and the direction as the locomotion data.

9. The apparatus according to claim 8, wherein the motion trajectory obtaining module comprises:

an initial data obtaining unit, configured to obtain an initial displacement and an initial velocity corresponding to the legged robot in a first state;

a first model determining unit, configured to determine, according to the initial displacement, the initial velocity, and the preset inverted pendulum model, a first inverted pendulum model corresponding to the legged robot in transformation from the first state to a fourth state; where the first state refers to a standing state of the legged robot before the lateral step locomotion, and the fourth state refers to a state where feet on a first side touch a ground after taking a step while feet on a second side have not taken a step yet and the feet on the two sides are simultaneously grounded when the legged robot performs lateral step locomotion in the direction, and;

a first trajectory obtaining unit, configured to, according to the first inverted pendulum model, obtain a first torso locomotion trajectory corresponding to the legged robot in transformation from the first state to the fourth state and obtain a first target displacement and a first target velocity corresponding to the legged robot in the fourth state; where the first target displacement is equal to the locomotion amplitude and a position corresponding to the first target displacement is used as the foot placement;

a second model determining unit, configured to determine, according to the first target displacement and the first target velocity, a second inverted pendulum model corresponding to the legged robot in transformation from the fourth state to a seventh state; where the seventh state refers to a state in which the feet on the second side touch the ground after taking a step and the feet on the two sides are grounded simultaneously;

a second trajectory obtaining unit, configured to obtain a second torso locomotion trajectory corresponding to the legged robot in transformation from the fourth state to the seventh state according to the second inverted pendulum model;

the torso locomotion trajectory of the legged robot comprises the first torso locomotion trajectory and the second torso locomotion trajectory.

10. The apparatus according to claim 7, wherein the locomotion data obtaining module comprises:

a disturbance data obtaining unit, configured to obtain lateral disturbance data of a torso of the legged robot, where the lateral disturbance data includes lateral velocity and lateral displacement;

a locomotion data determining unit, configured to determine that the lateral disturbance data is the locomotion data in response to the lateral disturbance data exceeding a preset disturbance threshold; wherein the preset disturbance threshold comprises a preset velocity threshold or a preset displacement threshold.

11. The apparatus according to claim 10, wherein the motion trajectory obtaining module comprises:

an amplitude and direction obtaining unit, configured to obtain a locomotion amplitude and a direction of the legged robot;

a first model determining unit, configured to determine, according to the lateral displacement and the lateral velocity corresponding to the legged robot in a first state and the preset inverted pendulum model, a first inverted pendulum model corresponding to the legged robot in transformation from the first state to a fourth state; where the first state refers to a standing state of the legged robot before the lateral step locomotion, and the fourth state refers to a state in which feet on a first side touch a ground after taking a step while feet on a second side have not taken a step yet and the feet on the two sides are simultaneously grounded when the legged robot performs lateral step locomotion in the direction;

a first trajectory obtaining unit, configured to, according to the first inverted pendulum model, obtain a first torso locomotion trajectory corresponding to the legged robot in transformation from the first state to the fourth state and obtain a first target displacement and a first target velocity corresponding to the legged robot in the fourth state; where the first target displacement is equal to the locomotion amplitude and a position corresponding to the first target displacement is used as the foot placement;

a second model determining unit, configured to determine, according to the first target displacement and the first target velocity, a second inverted pendulum model corresponding to the legged robot in transformation from the fourth state to a seventh state; where the seventh state refers to a state in which the feet on the second side touch the ground after taking a step and the feet on the two sides are grounded simultaneously;

a second trajectory obtaining unit, configured to obtain a second torso locomotion trajectory corresponding to the legged robot in transformation from the fourth state to the seventh state according to the second inverted pendulum model;
the torso locomotion trajectory of the legged robot comprises the first torso locomotion trajectory and the second torso locomotion trajectory.

12. The apparatus according to claim 9 or 11, wherein the motion trajectory obtaining module further comprises:

a second displacement obtaining unit, configured to obtain a second target displacement and a second target velocity corresponding to a current state of the legged robot during transformation process to the fourth state when the legged robot has not transformed to the fourth state;
a first trajectory updating unit, configured to update the first torso locomotion trajectory according to the second target displacement and the second target velocity.

13. A legged robot, comprising:

a memory; and
a processor, wherein
the memory is configured to store a computer program executable by the processor;
the processor is configured to execute the computer program in the memory to implement the method according to any one of claims 1 to 6.

14. A non-transitory computer-readable storage medium, wherein when an executable computer program in the storage medium is executed by a processor, the method according to any one of claims 1 to 6 can be implemented.

obtain locomotion data of a legged robot ⟋⟋ 11

determine a torso locomotion trajectory and foot placement of the legged robot according to the locomotion data and a preset inverted pendulum model corresponding to the legged robot ⟋⟋ 12

control the legged robot to perform lateral step locomotion based on the torso locomotion trajectory, so that feet of the legged robot move to the foot placement ⟋⟋ 13

FIG. 1

obtain a working mode of the legged robot, where the working mode includes a dancing mode ⟋⟋ 21

in response to the lateral step locomotion in the dancing mode, obtain a locomotion amplitude and a direction corresponding to the lateral step locomotion, and use the locomotion amplitude and the direction as the locomotion data ⟋⟋ 22

FIG. 2

obtain lateral disturbance data of a torso of the legged robot, where the lateral disturbance data includes lateral velocity and lateral displacement ⟋⟋ 31

in response to the lateral disturbance data exceeding a preset disturbance threshold, determine that the lateral disturbance data is the locomotion data; the preset disturbance threshold includeing a preset velocity threshold or a preset displacement threshold ⟋⟋ 32

FIG. 3

FIG. 4

FIG. 5

FIG. 6

| obtain an initial displacement and an initial velocity corresponding to the legged robot in a first state | 71 |

| determine, according to the initial displacement, the initial velocity, and a preset inverted pendulum model, a first inverted pendulum model corresponding to the legged robot in transformation from the first state to a fourth state | 72 |

| obtain a first torso locomotion trajectory corresponding to the legged robot in transformation from the first state to the fourth state and obtain a first target displacement and a first target velocity corresponding to the legged robot in the fourth state according to the first inverted pendulum model | 73 |

| determine, according to the first target displacement and the first target velocity, a second inverted pendulum model corresponding to the legged robot in transformation from the fourth state to a seventh state | 74 |

| obtain a second torso locomotion trajectory corresponding to the legged robot in transformation from the fourth state to the seventh state according to the second inverted pendulum model | 75 |

FIG. 7

FIG. 8

| |
|---|
| obtain a locomotion amplitude and a direction of the legged robot ~91 |

$\downarrow$

| |
|---|
| determine, according to the lateral displacement and the lateral velocity corresponding to the legged robot in the first state and a preset inverted pendulum model, a first inverted pendulum model corresponding to the legged robot in transformation from the first state to a fourth state ~92 |

$\downarrow$

| |
|---|
| obtain a first torso locomotion trajectory corresponding to the legged robot in transformation from the first state to the fourth state and obtain a first target displacement and a first target velocity corresponding to the legged robot in the fourth state according to the first inverted pendulum model ~93 |

$\downarrow$

| |
|---|
| determine, according to the first target displacement and the first target velocity, a second inverted pendulum model corresponding to the legged robot in transformation from the fourth state to a seventh state ~94 |

$\downarrow$

| |
|---|
| obtain a second torso locomotion trajectory corresponding to the legged robot in transformation from the fourth state to the seventh state according to the second inverted pendulum model ~95 |

FIG. 9

When the legged robot does not transform to the fourth state, obtain a second target displacement and a second target velocity corresponding to the legged robot in a current state during transformation process to the fourth state `101`

Update the first torso locomotion trajectory according to the second target displacement and the second target velocity `102`

FIG. 10

Start

Input direction and locomotion amplitude of lateral step

Determine whether a maximum value is exceeded?

Yes

No

Whether to take a step with the maximum value

No

Yes

Calculate torso locomotion trajectory and foot placement

Send the torso locomotion trajectory and the foot placement to a controller

Controller executes the torso locomotion trajectory and the foot placement

End

FIG. 11

Start

Whether subjected to lateral disturbance?

No

Yes

Calculate torso locomotion trajectory and foot placement

Send the torso locomotion trajectory and the foot placement to a controller

The controller executes the torse locomotion trajectory and the foot placement

End

FIG. 12

Quadruped robot controlling apparatus

locomotion data obtaining module 131

locomotion trajectory obtaining module 132

lateral step controlling module 133

FIG. 13

## INTERNATIONAL SEARCH REPORT

| International application No. |
| --- |
| **PCT/CN2022/090607** |

### A. CLASSIFICATION OF SUBJECT MATTER

G05D 1/08(2006.01)i

According to International Patent Classification (IPC) or to both national classification and IPC

### B. FIELDS SEARCHED

Minimum documentation searched (classification system followed by classification symbols)

G05D

Documentation searched other than minimum documentation to the extent that such documents are included in the fields searched

Electronic data base consulted during the international search (name of data base and, where practicable, search terms used)

CNTXT; ENTXTC; DWPI; VEN; ENTXT: 腿式, 轨迹, 落足点, 机器人, 着地点, 幅度, 跨步, 足式, 双足, 四足, 方向, 倒立摆, 跳舞, 落脚点, 落地点, robot, control, bipedal, inverted pendulum, falling point, trajectory, walking, four-footed, landing, point, lateral, stride, direction, dance, amplitude

### C. DOCUMENTS CONSIDERED TO BE RELEVANT

| Category* | Citation of document, with indication, where appropriate, of the relevant passages | Relevant to claim No. |
| --- | --- | --- |
| Y | CN 113359792 A (UBTECH ROBOTICS CORP.) 07 September 2021 (2021-09-07) description, paragraphs [0033]-[0088], and figures 1-5 | 1-14 |
| Y | CN 112327869 A (SHANDONG UNIVERSITY) 05 February 2021 (2021-02-05) description, paragraphs [0036]-[0126], and figures 1-4 | 1-14 |
| A | CN 112987769 A (WUHAN UNIVERSITY OF SCIENCE AND TECHNOLOGY) 18 June 2021 (2021-06-18) entire document | 1-14 |
| A | CN 114248855 A (BEIJING INSTITUTE OF TECHNOLOGY) 29 March 2022 (2022-03-29) entire document | 1-14 |
| A | CN 111913490 A (SHANDONG UNIVERSITY) 10 November 2020 (2020-11-10) entire document | 1-14 |
| A | CN 113050645 A (HUAZHONG UNIVERSITY OF SCIENCE AND TECHNOLOGY) 29 June 2021 (2021-06-29) entire document | 1-14 |
| A | US 2011098856 A1 (HONDA MOTOR CO., LTD.) 28 April 2011 (2011-04-28) entire document | 1-14 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 November 2022** | **30 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/090607** |

**C.     DOCUMENTS CONSIDERED TO BE RELEVANT**

| Category* | Citation of document, with indication, where appropriate, of the relevant passages | Relevant to claim No. |
|---|---|---|
| A | JP 2003136439 A (SONY CORP.) 14 May 2003 (2003-05-14)<br>entire document | 1-14 |
| A | US 2021237265 A1 (ZHEJIANG UNIVERSITY) 05 August 2021 (2021-08-05)<br>entire document | 1-14 |

Form PCT/ISA/210 (second sheet) (January 2015)

**INTERNATIONAL SEARCH REPORT**
Information on patent family members

International application No.

**PCT/CN2022/090607**

| Patent document cited in search report | | | Publication date (day/month/year) | Patent family member(s) | | | Publication date (day/month/year) |
|---|---|---|---|---|---|---|---|
| CN | 113359792 | A | 07 September 2021 | None | | | |
| CN | 112327869 | A | 05 February 2021 | None | | | |
| CN | 112987769 | A | 18 June 2021 | None | | | |
| CN | 114248855 | A | 29 March 2022 | None | | | |
| CN | 111913490 | A | 10 November 2020 | None | | | |
| CN | 113050645 | A | 29 June 2021 | None | | | |
| US | 2011098856 | A1 | 28 April 2011 | JP | 2011093027 | A | 12 May 2011 |
| JP | 2003136439 | A | 14 May 2003 | None | | | |
| US | 2021237265 | A1 | 05 August 2021 | WO | 2020233050 | A1 | 26 November 2020 |

Form PCT/ISA/210 (patent family annex) (January 2015)